# EUROPÄISCHE PATENTSCHRIFT

(11) **EP 1 187 975 B1**
(45) Veröffentlichungstag und Bekanntmachung des Hinweises auf die Patenterteilung: **07.04.2004**
(21) Anmeldenummer: 00934991.1
(22) Anmeldetag: 06.05.2000
(51) Int. Cl.: F02D 41/02

(54) **VERFAHREN UND VORRICHTUNG ZUR DESULFATISIERUNG EINES STICKOXIDABSORBERS**
METHOD AND DEVICE FOR DESULFATING A NITROGEN OXIDE ADSORBER
PROCEDE ET DISPOSITIF DE DESULFATATION D'UN ADSORBEUR D'OXYDE D'AZOTE

(30) Priorität: 23.06.1999 DE 19928725
(43) Veröffentlichungstag der Anmeldung: 20.03.2002
(73) Patentinhaber: DaimlerChrysler AG, 70567 Stuttgart (DE)
(72) Erfinder: BÖGNER, Walter, D-71686 Remseck (DE); HARDENBERG, Kirsten, D-70327 Stuttgart (DE); HERTZBERG, Andreas, D-70374 Stuttgart (DE); KARL, Günter, D-73732 Esslingen (DE); KRUTZSCH, Bernd, D-73770 Denkendorf (DE); MARX, Renate, D-71223 Leonberg (DE); RUZICKA, Norbert, D-71144 Steinenbronn (DE); SCHÖN, Christof, D-73630 Remshalden (DE); SCHRÖDER, Doris, D-71063 Sindelfingen (DE); VOIGTLÄNDER, Dirk, D-70825 Korntal-Münchingen (DE); WEIBEL, Michel, D-70619 Stuttgart (DE); WENNINGER, Günter, D-70599 Stuttgart (DE)
(86) Internationale Anmeldenummer: PCT/EP2000/004086
(87) Internationale Veröffentlichungsnummer: WO 2001/000976

(56) Entgegenhaltungen:
- DE-A- 19 511 548
- DE-C- 19 747 222

## Beschreibung

Die Erfindung bezieht sich auf ein Verfahren und eine Vorrichtung zur Desulfatisierung eines Stickoxidadsorbers einer Abgasreinigungsanlage für eine Verbrennungseinrichtung mittels von Zeit zu Zeit durchgeführter Desulfatisierungsphasen.

Es ist bekannt, in Abgasreinigungsanlagen für vorwiegend mager betriebene Verbrennungseinrichtungen, wie sogenannte Magermotoren von Kraftfahrzeugen, Stickoxidadsorber vorzusehen, meist in Form sogenannter Stickoxidadsorberkatalysatoren. In Magerbetriebsphasen der Verbrennungseinrichtung, während denen meist eine erhöhte Stickoxidkonzentration im Abgas vorliegt, werden die Stickoxide im Stickoxidadsorber adsorptiv zwischengepeichert, überwiegend in Nitratform. Spätestens wenn der Stickoxidadsorber seinen vollen Beladungsgrad erreicht hat, wird er vom Adsorptionsbetrieb auf Desorptionsbetrieb umgestellt, in welchem die zwischengespeicherten Stickoxide wieder desorbiert und anschließend z.B. in einer Reduktionsreaktion zu Stickstoff umgewandelt werden können. Dazu wird unter anderem der Betrieb der Verbrennungseinrichtung von mager auf fett umgestellt, wobei wie üblich unter Mager- bzw. Fettbetrieb ein Betrieb mit oberhalb bzw. unterhalb des stöchiometrischen Wertes eins liegendem Luft/ Kraftstoff-Verhältnis λ, auch Luftverhältnis genannt, des in der Verbrennungseinrichtung verbrannten Luft/Kraftstoff-Gemischs zu verstehen ist.

Eine bekannte Schwierigkeit solcher Anlagen besteht darin, daß aufgrund von Schwefel, der in üblichen Kraftstoffen und Motorölen enthalten ist, Schwefeldioxid im Abgas vorliegt, das durch Sulfatbildung zu einer Schwefelvergiftung des Stickoxidadsorbers führen kann, die dessen Stickoxid-Speicherkapazität mit der Zeit herabsetzt. Es ist daher bekannt, den Stickoxidadsorber immer dann, wenn er in seiner Stickoxid-Speicherkapazität merklich nachläßt, einem Desulfatisierungsvorgang zu unterziehen, um ihn von dem angelagerten Sulfat zu befreien. Dabei soll der Begriff Stickoxidadsorber vorliegend sowohl den Fall umfassen, daß dieser aus einem einzigen Adsorberkörper besteht, als auch den gleichermaßen bekannten Fall, daß dem eigentlichen Stickoxid-Adsorberkörper eine sogenannte SOₓ-Falle vorgeschaltet ist, welche die Schwefeloxide zwischenspeichert und so vom Stickoxid-Adsorberkörper fernhält und in analoger Weise von Zeit zu Zeit einer Desulfatisierung unterzogen wird.

Zur Desulfatisierung des Stickoxidadsorbers ist es bekannt, die Abgaszusammensetzung von mager auf fett umzustellen, z.B. durch entsprechende Betriebsumstellung der Verbrennungseinrichtung, und die Temperatur im Abgasstrang zu erhöhen, z.B. durch einen zu höheren Abgastemperaturen führenden Betrieb der Verbrennungseinrichtung und/oder durch eine elektrische Heizeinrichtung. Ein derartiges Desulfatisierungsverfahren ist in der Offenlegungsschrift EP 0 636 770 A1 beschrieben. Weitere, ähnliche Desulfatisierungsverfahren, die zusätzlich eine Sekundärluftzuführung oder einen geteilten Betrieb eines die Verbrennungsquelle darstellenden, mehrzylindrigen Verbrennungsmotors mit zu einem Teil fett und zum übrigen Teil mager betriebenen Zylindern beinhalten, sind in der Offenlegungsschrift DE 195 22 165 A1 und den älteren, nicht vorveröffentlichten Patentanmeldungen Nr. 197 47 222.2 und 198 02 631.5 beschrieben.

Während der Desulfatisierung des Stickoxidadsorbers gelangen Schwefelverbindungen in das den Stickoxidadsorber verlassende Abgas, wobei insbesondere Schwefeldioxid und Schwefelwasserstoff auftreten. Letzterer hat bekanntermaßen einen stechenden Geruch und führt bereits bei relativ geringen Konzentrationen zu einer Geruchsbelästigung.

Der Erfindung liegt als technisches Problem die Bereitstellung eines Verfahrens und einer Vorrichtung der eingangs genannten Art zugrunde, mit denen sich der Stickoxidadsorber wirksam desulfatisieren läßt und bei denen Maßnahmen für eine möglichst geringe Emission von Schwefelwasserstoff getroffen sind.

Die Erfindung löst dieses Problem durch die Bereitstellung eines Desulfatisierungsverfahrens mit den Merkmalen des Anspruchs 1 sowie einer zu dessen Durchführung geeigneten Desulfatisierungsvorrichtung mit den Merkmalen des Anspruchs 2.

Durch das erfindungsgemäße Verfahren nach Anspruch 1 und die erfindungsgemäße Vorrichtung nach Anspruch 2 wird der Gehalt an Kohlenmonoxid (CO) und/oder der Lambdawert des den Stickoxidadsorber verlassenden Abgasstroms während einer jeweiligen Desulfatisierungsphase erfaßt. Untersuchungen haben gezeigt, daß nach Beginn einer Desulfatisierungsphase, der die Umschaltung von einer mageren auf eine fette Abgaszusammensetzung beinhaltet, zunächst eine Freisetzung von Schwefeldioxid (SO₂) auftritt, daß im Verlauf dieser Schwefeldioxid-Freisetzung zum einen der Kohlenmonoxidgehalt des Abgases bis auf ein lokales Maximum anzusteigen beginnt, von wo aus er dann zunächst wieder abfällt, und zum anderen der Lambdawert des Abgases zunächst nur bis auf einen temporären Plateauwert im Bereich des stöchiometrischen Wertes eins abfällt und dort einige Zeit verharrt, bevor er mit einer beobachtbar steilen Flanke auf einen entsprechenden Zielwert abfällt. Erst nach Auftreten dieses lokalen Maximums in der CO-Konzentrationskurve bzw. der vom Plateauwert auf den Zielwert abfallenden Flanke des Lambdawertes setzt eine merkliche Bildung von Schwefelwasserstoff (H₂S) ein. Diese Erkenntnis wird vorliegend dazu genutzt, während der Desulfatisierungsphase durch die Erfassung des CO-Gehaltes das Auftreten von dessen lokalem Maximum bzw. durch Erfassung des Lambdawertes das Auftreten von dessen abfallender Stufenflanke zu detektieren und dies als Kriterium für ein Beenden der Desorptionsphase heranzuziehen.

Damit läßt sich sowohl ein zu frühes als auch ein unter dem Gesichtspunkt der Schwefelwasserstoffemissionen zu spätes Beenden der jeweiligen Desulfatisierungsphase vermeiden. Bei einer zu frühen Beendigung würde die Regeneration unvollständig bleiben, und zwar, wie Untersuchungen zeigen, selbst bei mehrfacher aufeinanderfolgender Wiederholung solcher zu kurzer Desulfatisierungsphasen. Bei zu langer Dauer der Desulfatisierungsphase würden merkliche Mengen an Schwefelwasserstoff entstehen, die unerwünschterweise mit dem Abgas emittiert oder mit entsprechendem Zusatzaufwand unschädlich gemacht werden müßten. Durch das Beenden der Desulfatisierungsphase zum Zeitpunkt des Auftretens des lokalen Maximums in der CO-Gehaltskurve bzw. der abfallenden Stufenflanke in der Lambdawertkurve oder zu einem definierten, geringfügig späteren Zeitpunkt läßt sich hingegen einerseits eine im wesentlichen vollständige Desulfatisierung und damit Regeneration des Stickoxidadsorbers erreichen und andererseits die Entstehung merklicher Mengen an Schwefelwasserstoff ohne weitere Zusatzmaßnahmen vermeiden. Je nach Anwendungsfall können zur vollständigen Desulfatisierung des Stickoxidadsorbers nur eine oder mehrere aufeinanderfolgende Desulfatisierungsphasen dieser Art vorgesehen sein, die dann jeweils von einem kurzzeitigen Wechsel auf eine magere Abgaszusammensetzung unterbrochen werden.

Eine vorteilhafte Ausführungsform der Erfindung ist in den Zeichnungen veranschaulicht und wird nachfolgend beschrieben. Hierbei zeigen:
- Fig. 1: ein schematisches Blockdiagramm einer Verbrennungseinrichtung mit zugeordneter Abgasreinigungsanlage mit Stickoxid-Adsorberkatalysator und einer zugehörigen Desulfatisierungsvorrichtung,
- Fig. 2: ein Kurvendiagramm zur Darstellung der Konzentrationen verschiedener Abgasbestandteile stromabwärts des Stickoxidadsorbers während einer Testbetriebsphase der Verbrennungseinrichtung von Fig. 1 einschließlich eines Desulfatisierungsvorgangs,
- Fig. 3: ein detailliertes Kurvendiagramm entsprechend Fig. 2 über den Zeitraum des Desulfatisierungsvorgangs mit Kohlenmonoxidgehalt-Auswertung und
- Fig. 4: ein detailliertes Kurvendiagramm über den Zeitraum eines Desulfatisierungsvorgangs mit Lambdawert-Auswertung.

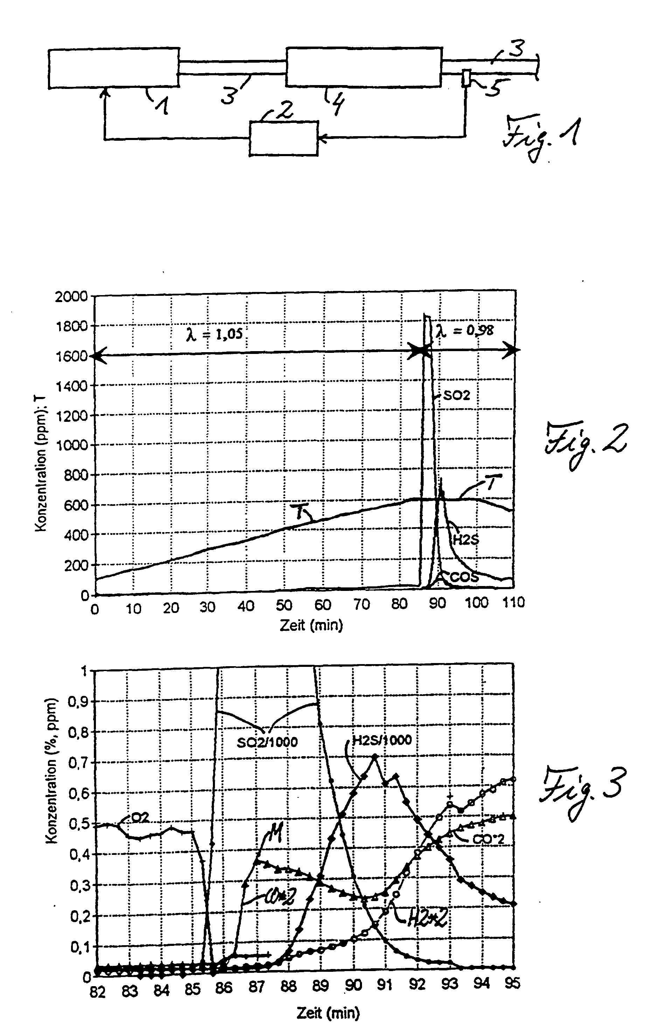

Fig. 1 zeigt schematisch eine Verbrennungseinrichtung 1, bei der es sich z.B. um einen vorwiegend mager betriebenen Ottomotor oder Dieselmotor eines Kraftfahrzeuges handeln kann und der eine Abgasreinigungsanlage zugeordnet ist. Die Abgasreinigungsanlage beinhaltet einen im Abgasstrang 3 der Verbrennungseinrichtung 1 liegenden katalytisch.wirksamen Stickoxidadsorber, d.h. einen Stickoxid-Adsorberkatalysator 4.

Dem allgemeinen Wunsch nach minimalem Kraftstoffverbrauch entsprechend wird die Verbrennungseinrichtung 1 möglichst viel im Magerbetrieb gefahren, soweit dies die Betriebssituation zuläßt. Der Magerbetrieb resultiert aber in der Regel in einem erhöhten Stickoxidanteil im Abgas der Verbrennungseinrichtung 1. Der Adsorberkatalysator 4 dient dazu, während dieser Betriebsphasen im Adsorptionsbetrieb die Stickoxide durch Adsorption aus dem Abgasstrom zu entfernen. Sobald seine Stickoxidaufnahmefähigkeit erschöpft ist, wird auf Desorptionsbetrieb umgestellt. In der Desorptionsphase wird der Adsorberkatalysator 4 regeneriert, indem die zuvor primär in Nitrat- oder Nitritform eingelagerten Stickoxide wieder desorbiert und umgewandelt werden. Für diese Umwandlung sind mehrere, hier nicht weiter interessierende, herkömmliche Vorgehensweisen möglich, wie Abgasrückführung oder katalytische Reduktion unter Zugabe eines geeigneten Reduktionsmittels, wie unverbrannter Kraftstoff oder Ammoniak, über die Verbrennungseinrichtung 1 oder über eine externe Einspreisung direkt in den Abgasstrang 3. Nach vollständiger Desorption der Stickoxide kann dann wieder auf Adsorptionsbetrieb umgestellt werden. Durch Einstellen geeigneter Bedingungen läßt sich die Desorption relativ rasch ausführen, so daß die Desorptionsphasen gegenüber den Adsorptionsphasen vergleichsweise kurz gehalten werden können. Neben dieser Stickoxidreinigungsfunktion können für die Abgasreinigungsanlage weitere Abgasreinigungsfunktionalitäten in herkömmlicher Weise vorgesehen sein, was hier nicht weiter von Interesse und daher nicht gezeigt ist.

Bei Verwendung schwefelhaltiger Brennstoffe für die Verbrennungseinrichtung 1, z.B. üblicher schwefelhaltiger Kraftstoffe für Kraftfahrzeug-Verbrennungsmotoren, wird neben Stickoxiden auch im Abgas enthaltener Schwefel in den Adsorberkatalysator 4 vor allem in Sulfatform eingelagert. Die Schwefeleinlagerung ist gegenüber den üblichen Stickoxiddesorptionsbedingungen ziemlich resistent, so daß der im Adsorptionsbetrieb eingelagerte Schwefel während des Stickoxid-Desorptionsbetriebs nicht vollständig freigesetzt wird. Da der eingelagerte Schwefel die Stickoxidadsorptionszentren des Adsorberkatalysators 4 blockiert, tritt mit der Zeit eine Schwefelvergiftung desselben auf, die dazu führt, daß dessen Stickoxidspeicherfähigkeit nachläßt. Wenn die Stickoxidspeicherkapazität unter einen bestimmten Wert gesunken ist, wird daher ein Desulfatisierungsvorgang durchgeführt, in welchem der Adsorberkatalysator 4 über eine Zeitdauer, die typischerweise deutlich länger ist als diejenige einer jeweiligen Stickoxiddesorptionsphase, geeigneten Desulfatisierungsbedingungen unterworfen wird.

Dies beinhaltet zum einen zu Beginn der Desulfatisierungsphase einen raschen Wechsel von einer zuvor vorliegenden mageren Abgaszusammensetzung auf eine fette Abgaszusammensetzung, z.B. dadurch, daß der Verbrennungseinrichtung 1 ein fettes anstelle eines mageren Luft/Kraftstoff-Gemischs zugeführt wird oder Kohlenwasserstoffe von außen in den Abgasstrang zudosiert werden. Zum anderen wird für die Einhaltung einer geeigneten Desulfatisierungstemperatur von z.B. 600°C oder darüber gesorgt. Hierdurch werden die an das Katalysatormaterial des Adsorberkatalysators 4 angelagerten Sulfate instabil und können desorbiert werden.

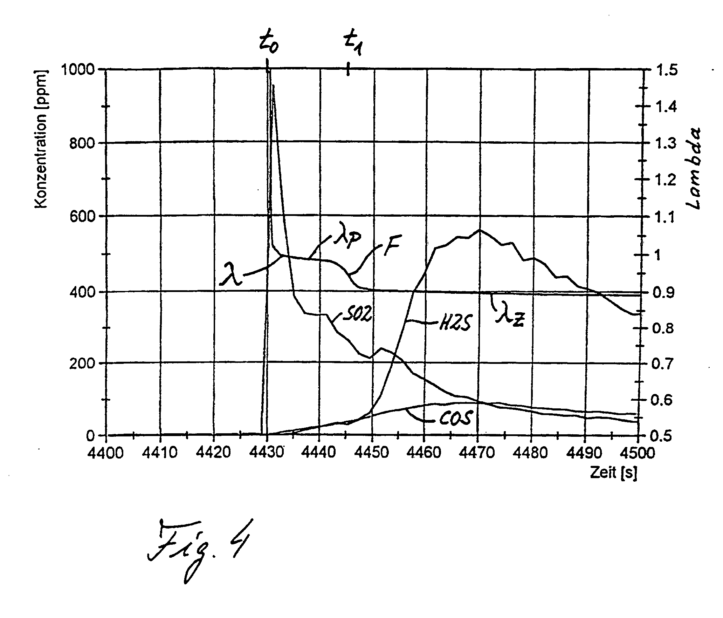

In den Fig. 2 und 3 ist in Diagrammform das Ergebnis eines experimentellen Testbetriebs des Systems von Fig. 1 zur Untersuchung des zeitlichen Verlaufs der Konzentration verschiedener Abgasbestandteile im Abgas stromabwärts des Adsorberkatalysators 4 speziell auch während einer Desulfatisierungsphase wiedergegeben. In Fig. 2 sind über einen Zeitraum von 110min mit einer Temperaturkennlinie T die Abgastemperatur, mit,einer Schwefeldioxid-Kennlinie SO2 der Schwefeldioxidgehalt des Abgasstroms, mit einer Kennlinie H2S der Schwefelwasserstoffgehalt des Abgasstroms und mit einer Kennlinie COS der COS(Kohlenstoffoxisulfid)-Gehalt des Abgasstroms, jeweils in ihrem Zeitverlauf wiedergegeben, erfaßt durch entsprechende Sensoren im Abgasstrang 3 stromabwärts des Adsorberkatalysators 4 während der Testbetriebsphase. Das Diagramm von Fig. 3 zeigt in größerem Detail über einen Zeitraum einer Desulfatisierungsphase von 82min bis 95min nach Beginn der Testbetriebsphase mit einer Kennlinie 02 die Konzentration an Sauerstoff, mit einer Kennlinie SO2/1000 den um den Faktor 1000 verkleinerten SO₂-Gehalt, mit einer Kennlinie H2S/1000 den ebenfalls um den Faktor 1000 verkleinerten H₂S-Gehalt, mit einer Kennlinie H2*2 den um den Faktor 2 erhöhten Wasserstoffgehalt und mit einer Kennlinie CO*2 den ebenfalls um den Faktor 2 vergrößerten Kohlenmonoxidgehalt des Abgases stromabwärts des Adsorberkatalysators 4, wobei wie auch in Fig. 2 alle genannten Größen quantitativ in ihrem zeitlichen Verlauf abgetragen sind.

Wie in Fig. 2 dargestellt, wird über einen Anfangszeitraum von ca. 85min die Verbrennungseinrichtung 1 im Magerbetrieb derart gefahren, daß das Luftverhältnis λ des von der Verbrennungseinrichtung 1 emittierten Abgases im mageren Bereich liegt, beispielhaft bei λ=1,05. Anschließend wird dann zu Beginn der Desulfatisierungsphase sprungartig auf Fettbetrieb gewechselt, im Beispiel von Fig. 2 auf ein Abgasluftverhältnis im fetten Bereich von λ=0,98. Der Wechsel von Mager- auf Fettbetrieb spiegelt sich im sprungartigen Abfall des Sauerstoffgehaltes im Abgas zum Umschaltzeitpunkt auf Desorptionsbetrieb wieder, wie an der Sauerstoffkennlinie O2 in Fig. 3 ersichtlich.

Aus den Fig. 2 und 3 ist des weiteren gut erkennbar, daß sofort nach dem Beginn der Desulfatisierungsphase zum Zeitpunkt t=85min die SO₂-Konzentration im Abgas stromabwärts des Adsorptionskatalysators 4 steil ansteigt, nach ca. 2min ein Maximum erreicht und danach relativ symetrisch wieder abfällt. Dies zeigt an, daß durch die beginnende Desulfatisierungsphase Schwefel aus dem Adsorberkatalysator 4 freigesetzt wurde.

Deutlich ist des weiteren anhand der Schwefelwasserstoffkennlinie H2S zu erkennen, daß die Bildung von Schwefelwasserstoff nicht wie die Schwefeldioxidbildung sofort mit Beginn der Desulfatisierungsphase, sondern demgegenüber verzögert einsetzt. Im gezeigten Beispiel steigt die Schwefelwasserstoffkonzentration erst ca. 3min nach Beginn der Desulfatisierungsphase merklich bis zum Erreichen eines Maximums an, wonach sie wieder etwas langsamer abfällt. Interessant ist nun der Verlauf der Kohlenmonoxidkonzentration während der Desulfatisierung. Wie sich anhand der zugehörigen Kennlinie CO*2 ergibt, steigt die CO-Konzentration im Abgas stromabwärts des Adsorberkatalysators 4 nach dem Beginn der Desulfatisierung zunächst während etwa 1min nur langsam und dann innerhalb von 0,5min steil an, bis sie bei einem Zeitpunkt von etwa t=87min nach Beginn des Testbetriebs, d.h. ungefähr zum Zeitpunkt maximaler SO₂-Freisetzung, ein lokales Maximum M annimmt, von dem aus sie zunächst wieder langsam abfällt, bevor sie dann später erneut anzusteigen beginnt.

Untersuchungen haben gezeigt, daß dieses lokale Maximum in der CO*2-Kennlinie des Kohlenmonoxidgehalts stets vor dem Einsetzen merklicher Schwefelwasserstoffbildung zu einem Zeitpunkt auftritt, zu dem bereits signifikante Schwefelmengen im Adsorberkatalysator 4 desorbiert und als Schwefeldioxid emittiert wurden. Diese Erkenntnis wird vorliegend dazu ausgenutzt, das Auftreten des lokalen Maximums M der CO-Konzentration im Abgas stromabwärts des Adsorberkatalysators 4 während einer Desulfatisierungsphase als Kriterium für eine rechtzeitige Beendigung derselben heranzuziehen, bevor sich merklich Schwefelwasserstoff entwickelt. Dazu kann die Desulfatisierungsphase sofort nach Erkennung des lokalen Maximums M der CO-Konzentration oder demgegenüber um einen definierten, vorgegebenen Zeitraum verzögert erfolgen. Der Verzögerungszeitraum kann z.B. experimentell ermittelt und davon abhängig gemacht werden, wieviel H₂S-Emissio-nen toleriert werden sollen. Dabei wird auf eine möglichst weitgehende Desulfatisierung des Adsorberkatalysators 4 geachtet, da Untersuchungen darauf hindeuten, daß zu kurze Desulfatisierungsphasen mit nur teilweiser Sulfatregeneration auch bei mehrmaliger aufeinanderfolgender Anwendung nicht zu einer vollen Regeneration des Adsorberkatalysators 4 zu führen scheinen.

Fig. 4 zeigt in ähnlicher Weise wie Fig. 3, jedoch mit höherer Zeitauflösung, ein Kurvendiagramm für ein weiteres erfindungsgemäßes Ausführungsbeispiel, bei dem anstelle des CO-Sensors 5 im System von Fig. 1 eine herkömmliche Lambda-Sonde eingesetzt wird, die den Lambdawert des den Stickoxidadsorber 4 verlassenden Abgasstroms erfaßt und der Desulfatisierungssteuereinheit 2 meldet. Beim Beispiel von Fig. 4 wird nach einer 30minütigen Adsorptionsphase zu einem Zeitpunkt t₀=4430s auf einen Desulfatisierungsvorgang umgeschaltet, wiederum dadurch, daß sprungartig das Lambdaverhältnis des der Verbrennungseinrichtung 1 zugeführten Gemischs auf einen fetten Wert umgestellt wird, beispielhaft auf einen Wert von ca. 0,9. Wie aus Fig. 4 ersichtlich, ergeben sich unmittelbar nach dem Umschalten auf Desulfatisierungsbetrieb wiederum die zu Fig. 2 oben erläuterten Verläufe der Schwefeldioxid-Kennlinie SO2 und der Kennlinie COS der Kohlenstoffoxisulfid-Konzentration des Abgasstroms, d.h. ein Abfall der SO₂-Konzentration und ein temporärer Anstieg der Kohlenstoffoxisulfid-Konzentration.

Gleichzeitig ist, wie aus Fig. 4 deutlich hervorgeht, ein Abfallen des Lambdawertes λ der Abgaszusammensetzung stromabwärts des Stickoxidadsorbers 4, der von der Lambda-Sonde gemessen wird, zunächst nur bis auf einen Plateauwert λ_{P} zu beobachten, der ungefähr beim stöchiometrischen Wert eins liegt. Bis zu einem Zeitpunkt t₁=4445s fällt der Lambdawert λ des Abgases stromabwärts des Stickoxidadsorbers 4 kaum noch ab, sondern verharrt beim Plateauwert λ_{P}. Erst danach, d.h. zu diesem Zeitpunkt t₁, fällt der von der Lambda-Sonde gemessene Abgas-Lambdawert λ mit einer wieder relativ steil abfallenden Flanke F vom Plateaubereich λ_{P} auf den Zielwert λ_{Z} ab, welcher der Umstellung auf fette Abgaszusammensetzung zu Beginn des Desulfatisierungsvorgangs entspricht, d.h. z.B. auf einen Zielwert λ_{z}=0,9. Wie aus Fig. 4 erkennbar, fällt das Auftreten dieser abfallenden Stufenflanke F des Abgas-Lambdawertes λ zeitlich recht genau mit einem beginnenden merklichen Anstieg der H₂S-Freisetzung zusammen, wie sie mit der Kennlinie H2S des Schwefelwasserstoffgehaltes im Abgas stromabwärts des Adsorberkatalysators 4 in Fig. 4 veranschaulicht ist.

Aus diesem experimentellen Resultat ergibt sich, daß das Auftreten der abfallenden Stufenflanke F des Abgasluftverhältnisses λ in gleicher Weise als Kriterium zur rechtzeitigen Beendigung einer Desulfatisierungsphase vor merklicher H₂S-Freisetzung verwendbar ist wie das lokale Maximum M der CO-Konzentration gemäß Fig. 3. Eine übermäßige Freisetzung von Schwefelwasserstoff während der Desulfatisierung kann somit dadurch vermieden werden, daß die Desulfatisierung mit dem Absinken des Abgas-Lambdawertes λ merklich unter den ströchiometrischen Wert eins beendet wird.

Es versteht sich, daß je nach Bedarf nur das eine oder nur das andere oder beide Kriterien in kombinierter Form zur Entscheidung über die Beendigung der Desulfatisierungsphase herangezogen werden können. Im letzteren Fall sind dann sowohl ein CO-Sensor wie auch eine Lambda-Sonde im Abgasstrang 3 stromabwärts des Adsorberkatalysators 4 angeordnet, und die Desulfatisierungssteuereinheit 2 wertet die Ausgangssignale beider Sensoren geeignet aus. Dies kann je nach Anwendungsfall eine Beendigung der Desulfatisierungsphase schon beim Auftreten des ersten der beiden Kriterien oder erst bei Auftreten auch des zweiten Kriteriums geschehen, jeweils mit oder ohne Zeitverzögerung. Zudem besteht in diesem Fall eine die Zuverlässigkeit erhöhende Redundanz, die ein rechtzeitiges Beenden der Desulfatisierung vor merklicher H₂S-Freisetzung auch noch erlaubt, wenn entweder der CO-Sensor oder die Lambda-Sonde defekt ist.

In jedem Fall wird durch die Erfindung eine einfache Möglichkeit zur Bestimmung eines günstigen Abschaltzeitpunktes für die Desulfatisierungsphasen bereitgestellt, die insbesondere bei Bedarf einen Wechsel vom Desulfatisierungsbetrieb auf anschließenden Normalbetrieb mit magerer Abgaszusammensetzung schon vor der Entwicklung signifikanter Schwefelwasserstoffmengen ermöglicht. Die Erfindung benötigt keinen Schwefelwasserstoffsensor, sondern lediglich einen herkömmlichen Kohlenmonoxidsensor 5 und/oder eine herkömmliche Lambda-Sonde im Abgasstrang 3 stromabwärts des Adsorberkatalysators 4, wie in Fig. 1 gezeigt. Dies wird, wie ebenfalls in Fig. 1 illustriert, dadurch zu einer entsprechenden Desulfatisierungsvorrichtung ergänzt, daß eine Desulfatisierungssteuereinheit 2 vorgesehen ist, der das Ausgangssignal des CO-Senors 5 bzw. der Lambda-Sonde zugeführt ist und die in Abhängigkeit davon den Betrieb der Verbrennungseinrichtung 3 steuert. Im Anwendungsfall eines Kraftfahrzeug-Verbrennungsmotors für die Verbrennungseinrichtung 1 ist die Desulfatisierungssteuereinheit 2 vorzugsweise von einem Motorsteuergerät gebildet, das im übrigen den Kraftfahrzeug-Verbrennungsmotor 1 in einer herkömmlichen Weise steuert. Was die Desulfatisierungsfunktion betrifft, so schaltet die Desulfatisierungssteuereinheit 2 die Verbrennungseinrichtung 1 bei Bedarf von Mager- auf Fettbetrieb um, um eine Desulfatisierungsphase einzuleiten, und beobachtet anschließend anhand des Ausgangssignales des CO-Sensors 5 bzw. der Lambda-Sonde den zeitlichen Verlauf der Kohlenmonoxidkonzentration bzw. des Lambdawertes im Abgas stromabwärts des Adsorberkatalysators 4. Sobald die Desulfatisierungssteuereinheit 2 dadurch erkennt, daß die erfaßte Kohlenmonoxidkonzentration ihr lokales Maximum M und/oder der erfaßte Lambdawertverlauf die vom temporären Plateauwert λₚ aus abfallende Flanke F erreicht hat, beendet sie sofort oder um einen vorgegebenen Zeitraum verzögert die Desulfatisierungsphase, indem sie den Betrieb der Verbrennungseinrichtung 1 wieder auf Magerbetrieb umstellt.

Es versteht sich, daß sich die Erfindung bei der Abgasreinigung nicht nur von Kraftfahrzeug-Verbrennungsmotoren, sondern auch von beliebigen anderen stationären und instationären Verbrennungseinrichtungen eignet, die schwefelhaltiges Abgas emittieren und denen eine Abgasreinigungsanlage mit Stickoxidadsorber zugeordnet ist.

## Patentansprüche

1. Verfahren zur Desulfatisierung eines Stickoxidadsorbers (4) einer Abgasreinigungsanlage für eine Verbrennungseinrichtung (1), insbesondere einen Kraftfahrzeug-Verbrennungsmotor, mittels von Zeit zu Zeit durchgeführter Desulfatisierungsphasen,
**dadurch gekennzeichnet, daß**
während der jeweiligen Desulfatisierungsphase der Kohlenmonoxidgehalt und/oder der Lambdawert des den Stickoxidabsorber (4) verlassenden Abgasstroms erfaßt und ein im erfaßten zeitlichen Verlauf des CO-Gehaltes auftretendes lokales Maximum (M) und/ oder eine im erfaßten zeitlichen Verlauf des Lambdawertes auftretende, von einem temporären Plateauwert (λ_{P}) im Bereich des stöchiometrischen Wertes eins aus auf einen Zielwert (λ_{Z}) fetter Abgaszusammensetzung abfallende Flanke (F) als Kriterium für das Beenden der Desulfatisierungsphase herangezogen wird.

2. Vorrichtung zur Desulfatisierung eines Stickoxidadsorbers (4) einer Abgasreinigungsanlage für eine Verbrennungseinrichtung (1), insbesondere einen Kraftfahrzeug-Verbrennungsmotor, mit
- einer Desulfatisierungssteuereinheit (2) zur Einstellung geeigneter Desulfatisierungsbedingungen während der jeweiligen Desulfatisierungsphase,
**dadurch gekennzeichnet, daß**
- ein Kohlenmonoxidsensor (5) zur Erfassung des Kohlenmonoxidgehaltes und/oder eine Lambda-Sonde zur Erfassung des Lambdawertes des den Stickoxidadsorber (4) verlassenden Abgasstroms vorgesehen ist und
- die Desulfatisierungssteuereinheit (2) das Ausgangssignal des Kohlenmonoxidsensors (5) und/oder der Lambda-Sonde empfängt und hinsichtlich des Auftretens eines lokalen Maximums (M) im zeitlichen Verlauf des erfaßten Kohlenmonoxidgehaltes und/oder einer von einem temporären Plateauwert (λ_{P}) im Bereich des stöchiometrischen Wertes eins aus auf einen Zielwert (λ_{Z}) fetter Abgaszusammensetzung abfallenden Flanke (F) auswertet und das Ende der Desulfatisierungsphase in Abhängigkeit von Zeitpunkt des Auftretens des lokalen Maximums (M) des Kohlenmonoxidgehaltes und/oder der abfallenden Flanke (F) des Lambdawertes festlegt.

## Revendications

1. Procédé d'élimination des sulfates ou de désulfatation d'un adsorbeur d'oxydes d'azote (4) d'une installation d'épuration de gaz d'échappement destiné à un groupe de combustion ou d'incinération (1), notamment un moteur à combustion interne de véhicule automobile, au moyen de phases de désulfatation effectuées de temps à autre,
**caractérisé en ce que** pendant chaque phase de désulfatation respectivement considérée, on relève la teneur en monoxyde de carbone et/ou la valeur lambda de l'écoulement de gaz d'échappement quittant l'adsorbeur d'oxydes d'azote (4), et on utilise en tant que critère pour achever la phase de désulfatation, un maximum local (M) apparaissant dans la loi de variation en fonction du temps de la teneur en CO relevée et/ou un flanc descendant (F) qui apparaît dans la loi de variation en fonction du temps de la valeur lambda relevée, et qui s'étend d'une valeur de plateau temporaire (λₚ) dans la zone de la valeur stoechiométrique de un, vers une valeur cible (λ_{Z}) correspondant à une composition riche des gaz d'échappement.

2. Dispositif d'élimination des sulfates ou de désulfatation d'un adsorbeur d'oxydes d'azote (4) d'une installation d'épuration de gaz d'échappement destiné à un groupe de combustion ou d'incinération (1), notamment un moteur à combustion interne de véhicule automobile, comprenant
- une unité de commande de désulfatation (2) pour régler des conditions de désulfatation appropriées pendant chaque phase de désulfatation respectivement considérée,
**caractérisé**
- **en ce qu'**il est prévu un capteur de monoxyde de carbone (5) destiné à relever la teneur en monoxyde de carbone et/ou une sonde lambda destinée à relever la valeur de lambda de l'écoulement de gaz d'échappement quittant l'adsorbeur d'oxydes d'azote (4), et
- **en ce que** l'unité de commande de désulfatation (2) reçoit le signal de sortie du capteur de monoxyde de carbone (5) et/ou de la sonde lambda, et l'évalue quant à l'apparition d'un maximum local (M) dans la loi de variation en fonction du temps de la teneur en monoxyde de carbone relevée et/ou d'un flanc descendant (F) s'étendant d'une valeur de plateau temporaire (λₚ) dans la zone de la valeur stoechiométrique de un, vers une valeur cible (λ_{z}) correspondant à une composition riche des gaz d'échappement, et l'unité de commande définit l'achèvement ou la fin de la phase de désulfatation en fonction de l'instant de l'apparition du maximum local (M) de la teneur en monoxyde de carbone et/ou du flanc descendant (F) de la valeur de lambda.

## Claims

1. Method for the desulphurisation of a nitrogen oxide adsorber (4) of an exhaust gas purification facility for a combustion device (1), in particular an internal-combustion engine of a motor vehicle, by means of desulphurisation phases carried out from time to time, **characterised in that** during the respective desulphurisation phase, the carbon monoxide content and/or the lambda value of the exhaust gas stream leaving the nitrogen oxide adsorber (4) are detected and a local maximum (M) occurring in the detected time curve of the CO content and/or a slope occurring in the detected time curve of the lambda value and falling from a temporary plateau value (λₚ) in the range of the stoichiometric value of one to a target value (λ_{z}) of rich exhaust gas composition is used as a criterium for the ending of the desulphurisation phase.

2. Device for desulphurisation of a nitrogen oxide adsorber (4) of an exhaust gas purification facility for a combustion device (1), in particular an internal-combustion engine of a motor vehicle, comprising
- a desulphurisation control unit (2) for adjusting suitable desulphurisation conditions during the respective desulphurisation phase, **characterised in that**,
- a carbon monoxide sensor (5) is provided to detect the carbon monoxide content and/or a lambda probe is provided to detect the lambda value of the exhaust gas stream leaving the nitrogen oxide adsorber (4) and
- the desulphurisation control unit (2) receives the output signal of the carbon monoxide sensor (5) and/or of the lambda probe and evaluates it with respect to the occurrence of a local maximum (M) in the time curve of the detected carbon monoxide content and/or a slope (F) falling from a temporary plateau value (λₚ) in the range of the stoichiometric value of one to a target value (λ_{z}) of rich exhaust gas composition and establishes the end of the desulphurisation phase as a function of the point in time of the occurrence of the local maximum (M) of the carbon monoxide content and/or the falling slope (F) of the lambda value.
